# EUROPEAN PATENT SPECIFICATION

(11) **EP 0 576 908 B1**
(45) Date of publication and mention of the grant of the patent: **20.08.1997**
(21) Application number: 93109581.4
(22) Date of filing: 16.06.1993
(51) Int. Cl.: B23D 33/00, B21D 28/00, B26B 15/00

(54) **Portable machine tool for shearing metal sheets and profiles**
Tragbare Werkzeugmaschine zum Schneiden von Metallblechen und -profilen
Machine-outil portable pour couper des tôles métalliques et des profils

(30) Priority: 30.06.1992 IT PN920053
(43) Date of publication of application: 05.01.1994
(73) Proprietor: Maschio, Rodolfo, I-31029 Vittorio Veneto (Treviso) (IT)
(72) Inventor: Maschio, Rodolfo, I-31029 Vittorio Veneto (Treviso) (IT)
(74) Representative: Da Riva, Ermanno

(56) References cited:
- FR-A- 2 405 767
- SOVIET INVENTIONS ILLUSTRATED Section PQ, Week D15, 20 May 1981 Derwent Publications Ltd., London, GB; Class P54, AN D 3228 & SU-A-751 527 (CHEVYAKOVNI) 30 July 1980.

## Description

The invention described herewith relates to a portable machine tool for shearing metal sheets and profiles according to the precharacterising portion of claim 1; see FR-A 2 405 767.

Specifically this invention refers to a portable power shearer,to shear prebent sheets used in construction covering works.

Galvanised steel corrugated or Greek fret profile sheets,for instance are commonly used as covering material for roofs-particularly for roofs of industrial buildings.

In this type of roof covering the edges at the top of the roof's pitches, converging at the roof's ridge,are overlapped by a protection sheet extending all along the ridge.

Usually such ridge protection sheets are of smooth surface and are bent so as to have a cross-section the shape of an open-base pentagon.

it must be pointed out that,in order to obtain the joining of the ridge sheet with the contour of the covering sheet it overlaps,the ridge sheet must be previously indented into shapes such as ondulated or Greek fret profile.

Because of inavitable uneveness in the laying down of the metal sheets covering the roof pitches,it is preferable to trim the ridge sheets on site with manual shears (two blades) or a similar tool.

Such manual tools require considerable effort without satisfactory cutting precision.

As a consequence,the shaped indentations on the free edges of the ridge's sheet are either incorrectly or even incompletely executed.

In fact,with the use of Greek fret covering sheets,it often happens that the frets on the protective-ridge sheets are obtained by cutting the two slanting sides of the fret and bending out the part of sheet in between.

The manufacturing of ridge sheets equipped both with shaped openings and the same cross-section (corrugated or Greek fret) as the sheets it overlaps is well known.such ready-for-use sheets have the disadvantages both of being produced in fixed lengths and of lack of adaptation to the inevitable laying uneveness in laying the sheets covering the roof's pitches.

Therefore,such prefabricated metal sheets require laborious adaptations to the irregularities in the pitches'covering sheets,causing undesired time delays in their installation.

The main purpose of this invention is to produce a machine-tool for shearing metal sheets and profiles,that allows in a simple and rational way to avoid the above-mentioned inconveniences.

This one and more purposes are attained in accordance with the invention by a machine-tool having the features of claim 1.

Features and advantages of the machine-tool,will be better understood with the help of the descroption below and with the enclosed schematic diagrams in which:
- Figure 1 shows a lateral view of the machine according with the invention;
- Figure 2 shows a view from above of the machine in fig.1;
- Figure 3 is a front view of the machine;
- Figure 4 represents a perspective view of the machine in operation.

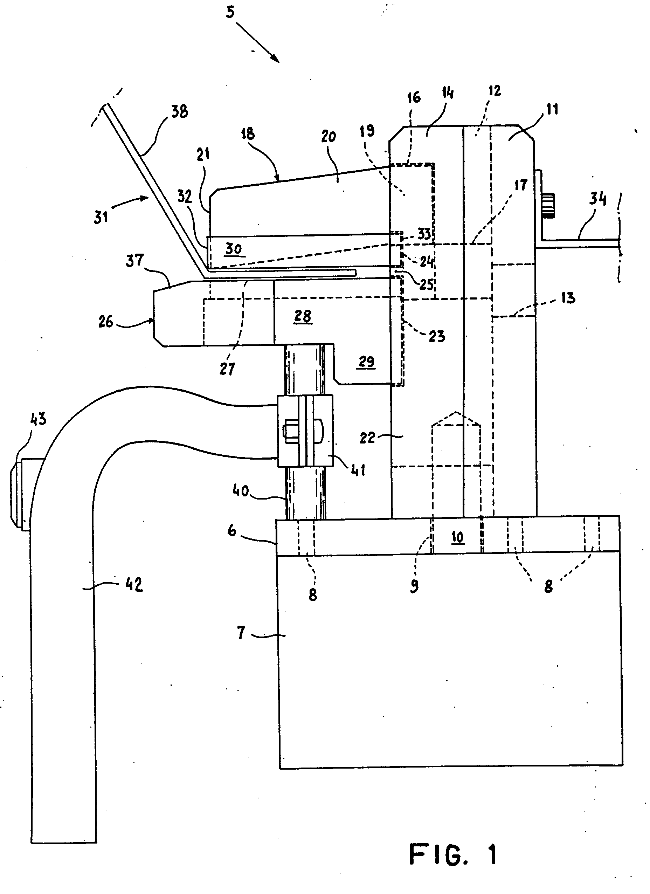

With particular reference to fig.1,machine 5 as per the invention,features an assembly flange 6 on one side of which the shearing elements are fixed, while on the other side,driving gear 7 of the above shearing elements,is anchored.

Particularly,assembly flange 6 is shaped like a prism with a square base featuring threader through holes 8 that allow anchoring,by means of a screw system,of both driving gear 7 and of the shearing elements.

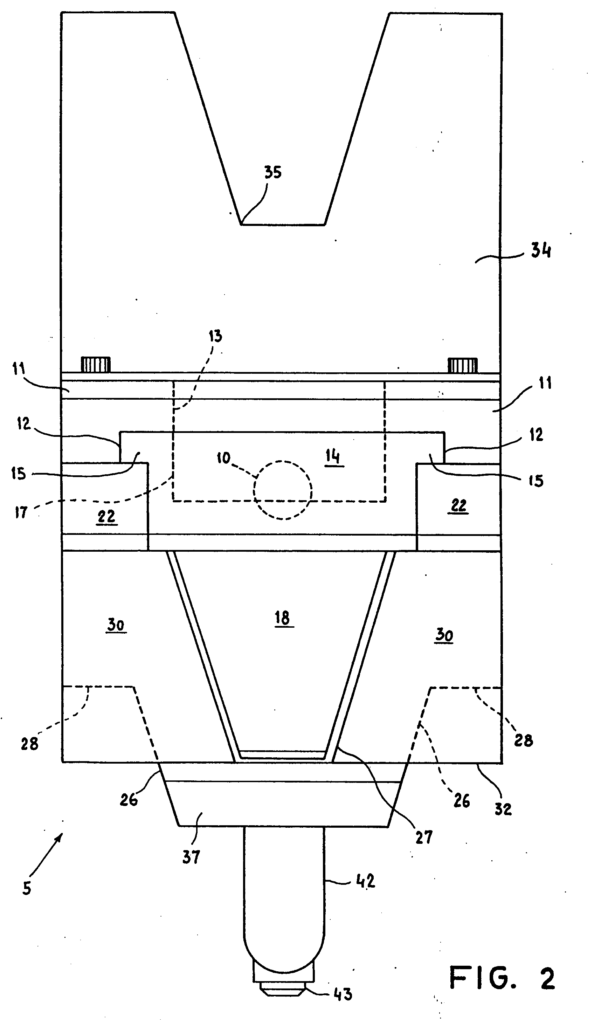

Assembly flange 6 is provided with a central hole 9,as passage for elements 10 (Fig.2) that drive the shearing elements in motion.

The shearing elements comprise a vertical guide 11 shaped as a prism block having a cross-section that resembles the letter "C" (Fig.2).

Sliding plates 12 (Fig.2) Whose purpose will be described later,are located on the internal side of the two lateral shoulders of guide 11.

The central surface of guide 11 is crossed by a transverse opening,whose porpose will also be described later (Fig.1 and 2).

A blanking-punch-slide 14 is lodged into vertical guide 11.

Sliding blocks 15,conceived to fit slidingly into plates 12 of guide 11, protrude from the sides of slide 14.

The lower end of slide 14 is joined with driving elements 10,for instance with a screw system.

In the central part of slide 14,a niche 16 (Fig.1) is obtained,of almost rectangular port,into which several through holes are machined (not shown in the diagrams).

Below niche 16 slide 14 is crossed by a transversal opening 17 of a shape corresponding to that of opening 13 into guide 11 (Fig.1).

One end of cutting punch 18 is removably fixed into niche 16 through a screw system.

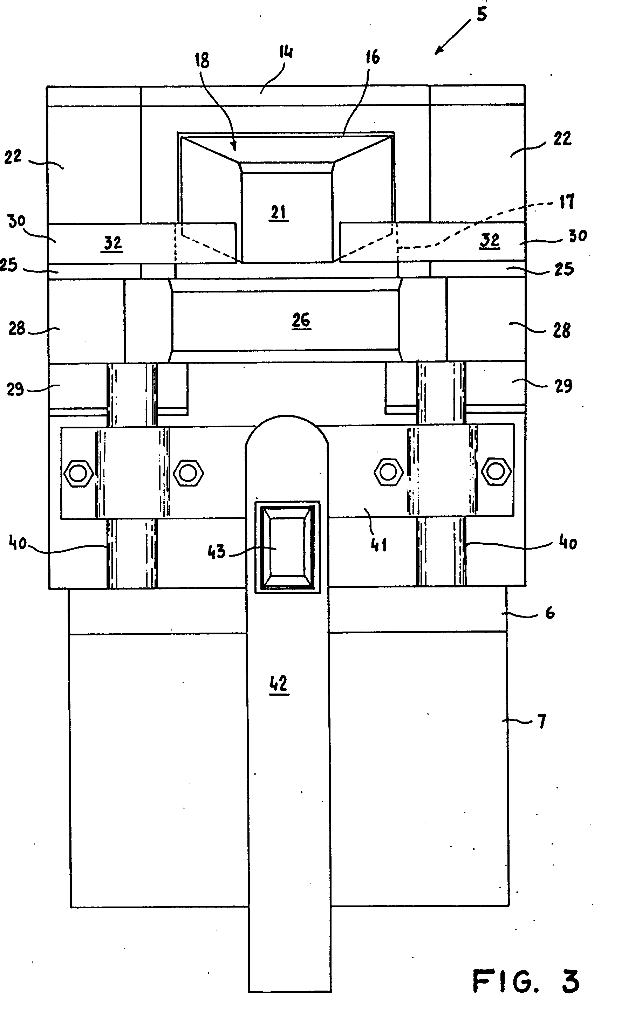

Punch 18 shows a parallelepiped part of anchorage 19 (Fig.1) and a trapezoidal-slanting-prism (Fig.2) cutting part 20 whose smaller base 21 is shifted towards the direction of the shearing (Fig.1 and 3).

Slide 14 is held in its correct sliding position by two parallelepipedal vertical stanchions 22 (Fig.2),suitable to limit frontally plates 12 into guide 11.Stanchions 22 present on their frontal surface,two recesses 23,24 (Fig.1) one,23,larger than the other 24 and both being separated by a horizontal baffle 25.A beat matrix 26 for cutting punch 18 is removably fixed on the front side of stanchions 22.

Matrix 26 presents a body with a cross-section shaped like the letter "V" (Fig.2) and a longitudinal section shaped like the letter "L" (Fig.1).

With reference to the V-shaped cross-section,matrix 26 has an internal shearing edge 27 approximately corresponding in shape to the two slanting sides and to the minor base of the isosceles trapezium that constitutes the shearing part 20 of cutting punch 18.

The above-mentioned shearing edge 27 is composed of beat surfaces that are upright but appropriately slanted towards the inside of the trapezium in order to support the shearing operation and the release of the slice of the cut metal sheet.

Two straight wing 28 (Fig.2) extend from the sides of shearing edge 27, from which two vertical extensions 29 (Fig.1) lead off at right angles in the direction of assembly flange 6,with the purpose of tightening the structure.

Such wings 28 and vertical extensions 29 of matrix 26 are respectively crossed by holes (not shown in the diagrams) that correspond to through holes into the shoulders of guide 11 and into recess 23 of stanchions 22 allowing the reciprocal fastening of such components with screw and centring pin-systems.

Spacers 30 are fitted over matrix 26 for the correct positioning of the sheet 31 to be sheared (Fig.1).Spacers 30 are prism-shaped with their bases shaped as a right angle trapezium (Fig.2).

Frontal surface spacing 32 determines the depth of introduction of the sheet 31 to shear and form the beat surface for its slanting side 38.

The back surface 33 of the two spacers 30 is anchored,by screw systems, into indenting 24 of vertical stanchions 22.

The two spacers 30,in their slanting side,adjacent to blanking punch 18, follow the profile of shearing edge 27 of matrix 26.This precaution has the purpose of eliminating ports,between blanking punch 18 and matrix 26, for the safety of the operator's fingers.

Matrix 26 is structurally connected to the assembly flange 6 by two cylindrical tightening elements 40 ( Fig.3);the ends of cylinders 40 are respectively anchored,with screw systems,to the lower side of matrix 26 and to the upper side of assembly flange 6.

A handle 42,to hold for transport and operation of machine 5,is connected to cylinders 40 through a bracket 41.Operation swithch 43 of machine 5 is located in an appropriate slot into handle 42.

A centering template 34 is fixed onto the back of vertical guide 11,protruding vertically.

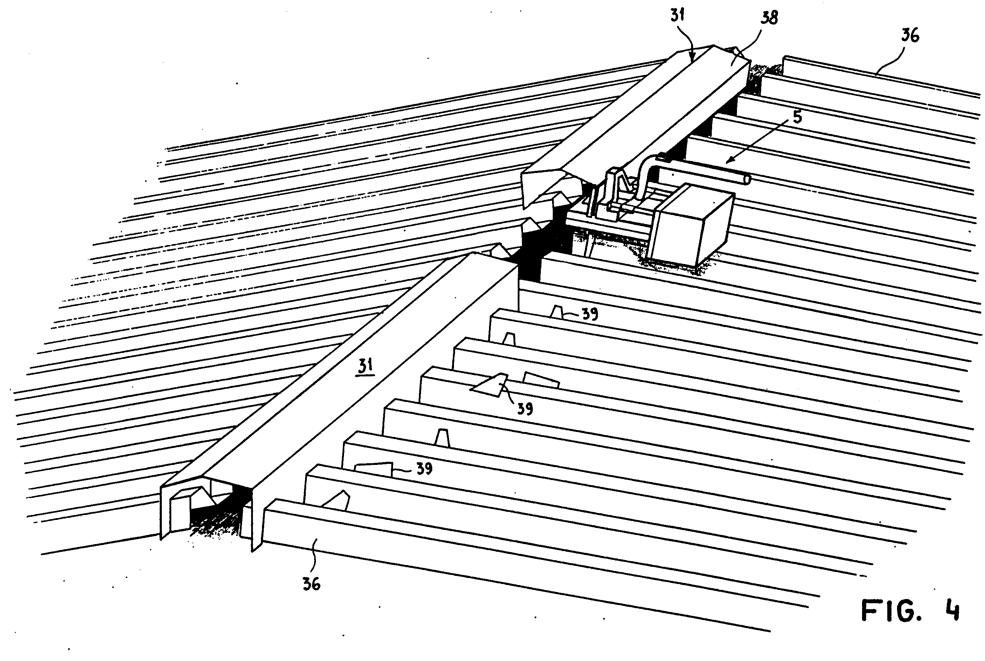

Template 34 is composed of a metallic plate which has the edge (opposite to the anchorage)shaped as the Greek fret profile 35 of sheet 36 (Fig.4) used for roof covering.

Template 34 is fixed in such a position that its shaped contour is coaxial with beat matrix 26 and with blanking punch 18.

This permits a shearing of ridge sheet 31 that corresponds precisely to the contour of covering sheets 36 even when these show uneveness of installation.

The driving gear may be composed of an hydraulic jack 7 having its stem 10 connected to the lower part of the blanking punch-slide 14.

Alternatively,pneumatic or electromechanical driving gears may be used.

In all possible alternative driving gears,all driving and control components are expected to ensure a correct functioning of the machine 5 and are sufficiently well known as not to require further description.

For the realization of the present description it is enough to say that upon operation of machine 5,the stem 10 of jack 7 drives slide 14 and punch 18 towards the beat surfaces of matrix 26.

In known manner,the return movement of stem 10 may be operated by a compression spring (not shown in the diagrams);in case of single action pneumatic or hydraulic jack 7,or through applying pressure on the opposite face of the piston in case of a double action jack 7.

Machine 5,as per the invention,may be profitably but not exclusively used to profile the edges of protection sheets 31 located over the roof's covering redge (Fig.4).

In general,redge metal sheet 31 is bent so as to have a cross-section the shape of an open base pentagon.

The ridge metal sheet 31 is laid on the sides of the cover pitches and its free edges are profiled in order to match the Greek fret of the underlying sheets 36.

With machine 5,as per the invention, this phase of profiling while laying the sheets may be profitably carried out in the following manner.

After positioning the centering template 34 over the corresponding profile of the cover sheet 36,one of the free contours of the sheet 31 is inserted between matrix 26 and the blanking punch 18 ( Fig.4).In order to ease the introduction of sheet 31,the upper front edge of matrix 26 is bevelled so as to constitute a draft surface 37 (Fig.1).The correct depth of introduction of sheet 31,between matrix 26 and blanking punch 18 is assured by the beat performed by the adjacent slanting side 38,belonging to sheet 31,on the externel surfaces 32 of spacers 30.

After verifying the correct position of machine 5,the operator sets in motion blanking punch 18 in order to shear metal sheet 31.

To be noted that the inclination of punch 18 has the purpose to ease this phase by concentrating the shearing force on small portions of the cutting edge of punch 18.

The slice 39 of metal sheet 31 exits,by gravity,through openings 17 and 13 respectively on slide 14 and on vertical guide 11.

By simply substituting punch 18,matrix 26 and their related centering devices 34 and spacers 30,machine 5,as per the invention,may shear ridge sheets 31 to be layed on cover metal sheets 36 of a shape different from the Greek fret profile.

As described above,it appears obvious that machine 5,as per the invention, obtains the purposes to accomplish in a simple,quick and rational way,a precise shearing of the free contour of a metal redge sheet 31.

Furthermore,machine 5,as per the invention,may accomplish the shearing of ridge sheet 31 directly on the layout site.This allows carpenters and tinsmiths to precisely profile ridge sheet 31 even when sheet 36,covering the roof's pitches,show lay-down uneveness.

Obviously,to machine 5,as per the invention,variations and modifications may be applied,however,without straying from the scope of the claims.

For instance,handle 42 may be composed and applied to machine 5 in ways different from the ones described.

Finally,the centering template 34 may also be composed by a bent metal rod.

## Claims

1. Portable machine tool for shearing metal sheets and profiles,in particular machine (5) for shearing a profiled contour on the free edges of a protection metal sheet (31) to be placed vertically over the ridge of a roof made with covering metal sheets (36) of shaped cross-section, comprising
- means (14) removably holding a shaped blanking punch (18);
- means of guide (11,12) within which the above punch holder means (14) are slide-driven into approach with a matrix (26) open and removably fixed to said means of guide (11,12);
- means (7) for the operation of the above punch holder means (14) with an alternate motion;
- means (10) that transmit motion from the means of operation (7) to the punch holder means (14), characterised by the fact of including:
- Insertion means (37) for a correct introduction of the contour of sheet (31) between mwtrix (26) and punch (18);
- spacing and protection means (30) that determine the depth of introduction into machine (5) of the edge of the sheet (31) to be sheared and that with a safety purpose,eliminate lateral ports between the matrix (26) and the punch (18);
- centering means (34) for the correspondence between the shaped contour of the cover metal sheet (36) and the shape to be sheared in the free edge of the protection sheet (31) as well as transversal openings (17,13) respectively located in the above punch (18) holder means (14) and in the related guide means (11,12) for the release of the slice (39) of metal sheet (31).

2. Portable machine tool (5) as per claim 1 for shearing into the free edge of roof ridge protection sheet (31) made with cover sheets of Greek fret shape or corrugated sheet-shape,trapezoidal shapes or corresponding to the various possible shapes of said cover sheets (36); characterised by the fact that said punch holder means are constituted of a slide (14) with lateral slides (15) and a niche (16) for the anchoring of punch (18);that said punch (18) shows a parallelepipedal part (19) to ensure its anchorage into niche (16) of slide (14) and a shearing part (20) in the shape of a slanted trapezoidal prism whose minor base (21)is shifted towards the direction of the shearing.

3. Portable machine tool as per the above claims,characterized by the fact that the said guide means comprise a guide (11) having a prism-shaped body and a cross-section shaped as the letter "C" and presenting plates (12) obtained on the internal side of its shoulders,two stanchions (22) of parallelepipedal shape with the purpose of limiting,on the front of guide (11) the plates (12) for the alternative running of slide (14) with respect to a matrix (26) open and fixed removably into a recess (23) on the frontal side of stanchions (22).

4. Portable machine tool as per the above claims,characterized by the fact that said matrix (26) shows a body with a cross-section shaped like a letter "V" and a longitudinal section shaped like the letter "L";that the shearing edge (27) of matrix (26) almost corresponds to the two slanted sides and to the minor base of the trapezium that constitutes the shearing part (20) of blanking punch (18), that the beat surfaces of shearing edge (27) are slanted towards the inside of the trapezium formed by them and that from the sides of shearing edge (27) two wings (28) protrude from which respective vertical portions (29) depart at right angle in the direction of the assembly flange (6) for the purposes of structure-hardening.

5. Portable machine tool as per the above claims,characterised by the fact that the means of operation of punch holder (14) are constituted by a hydraulic jack (7) or by a pneumatic jack,or by an appropriate electromechanical device whose stem (10) is connected to slide (14) holding punch (18).

6. Portable machine tool as per the above claims characterized by the fact that the insertion means for the correct introduction of the metal sheet (31) between matrix (26) and punch (18) are constituted by a bevel (37) of the upper frontal edge of matrix (26).

7. Portable machine tool as per the above claims,characterised by the fact that the above-mentioned spacers and protection means are constituted by prism-shaped bodies (30) having bases the shape of a right angle trapezium and frontal spacers (32) that constitute beat surfaces for a slanted side (38) of the sheet (31) to be sheared,surfaces (33) removably fixed to a recess (24) into the front side of stanchions (22) and slanting surfaces corresponding to the shearing edge (27) of matrix (26) so that all ports are eliminated between punch (18) and matrix (26) for safety purposes.

8. Portable machine tool as per the above claims,characterized by the fact that the above mentioned centering means are composed of a template (34) made of a metal plate fixed to the rear of guide (11) and protruding at right angle form it,said template (34) shows the side opposite to the anchorage,coaxial with matrix (26) equal to the profile of the cover shaped metal sheet (36).

9. Portable machine tool as per the above claims,characterized by the fact that into the central wall guide (11) and in the part of slide (14) directly below niche (16) for anchoring of punch (18) are present two cross-openings (13,17), meant to release the slice (39) of plate (31) by gravity.

10. Portable machine tool as per the above claims,characterized by the fact that the group matrix (26) and punch (18) may have reciprocally different shapes and may be changed to fit various profiles of covering sheets (36).

## Patentansprüche

1. Tragbare Werkzeugmaschine zum Abscheren von metallischen Blechen und Profilen, insbesondere Maschine (5) zum Abscheren eines profilierten Umrisses an den freien Kanten eines Schutzblechs (31), das über dem First eines Daches aus Deckblechen (36) vorgegebenen Querschnitts vertikal anzuordnen ist, mit:
- einer Einrichtung (14) zum lösbaren Halten eines Stanzstempels (18);
- einer Führungseinrichtung (11, 12), in der die vorgenannte Stempelhalteeinrichtung (14) gleitend zu einer Matrix (26) hin antreibbar ist, die zur Führungseinrichtung (11, 12) hin offen ist und lösbar an dieser befestigt ist;
- einer Einrichtung (7) zum Antreiben der vorgenannten Stempelhalteeinrichtung (14) in einer hin- und hergehenden Bewegung;
- einer Einrichtung (10) zum Übertragen der Bewegung der Antriebseinrichtung (7) auf die Stempelhalteeinrichtung (14);
gekennzeichnet durch
- eine Einführeinrichtung (37) zum korrekten Einführen des Umrisses des Blechs (31) zwischen die Matrix (26) und den Stanzstempel (18);
- eine Abstands- und Schutzeinrichtung (30), die festlegt, wie tief der Rand des abzuscherenden Blechs (31) in die Maschine (5) eingeführt wird, und die aus Sicherheitsgründen seitliche Öffnungen zwischen der Matrix (26) und dem Stanzstempel (18) beseitigt;
- eine Zentriereinrichtung (34) zur Herstellung einer Übereinstimmung zwischen der Umrißform des Deckblechs (36) und der am freien Rand des Schutzblechs (31) abzuscherenden Form, sowie
- in der Stempelhalteeinrichtung (14) und in der zugehörigen Führungseinrichtung (11, 12) ausgebildete Queröffnungen (17, 13) zum Entlassen des abgeschnittenen Stücks (39) des Schutzblechs (31).

2. Tragbare Werkzeugmaschine (5) nach Anspruch 1, die ausgebildet ist, in den freien Rand eines Schutzblechs (31) für den First eines aus Deckblechen griechischer Form oder aus Wellblech gebildeten Daches trapezförmige oder den verschiedenen möglichen Formen der Deckbleche (36) entsprechende Formen zu schneiden, dadurch gekennzeichnet, daß die Stempelhalteeinrichtung aus einem Gleitstück (14) mit seitlichen Gleitflächen (15) und einer Nut (16) zum Verankern des Stanzstempels (18) besteht; und daß der Stanzstempel (18) ein quaderförmiges Teil (19), das dessen Verankerung in der Nut (16) des Gleitstücks (14) sicherstellt, und ein Scherteil (20) in Form eines abgeschrägten Trapezprismas, dessen kleinere Grundfläche (21) in Scherrichtung versetzt ist, aufweist.

3. Tragbare Werkzeugmaschine nach einem der vorangehenden Ansprüche, dadurch gekennzeichnet, daß die Führungseinrichtung eine Führung (11) mit einem prismenförmigen Körper C-förmigen Querschnitts umfaßt, der an den Innenseiten seiner Schultern Leisten (12) aufweist, wobei zwei quaderförmige Blöcke (22) an der Vorderseite der Führung (11) die Leisten (12) bei der hin- und hergehenden Bewegung des Gleitstücks (14) bezüglich einer Matrix (26) begrenzen, die in einer Ausnehmung (23) an der Vorderseite der Blöcke (22) mündet und lösbar daran befestigt ist.

4. Tragbare Werkzeugmaschine nach einem der vorangehenden Ansprüche, dadurch gekennzeichnet,
- daß die Matrix (26) einen Körper mit V-förmigem Querschnitt und L-förmigem Längsschnitt aufweist;
- daß die Scherkante (27) der Matrix (26) im wesentlichen den beiden abgeschrägten Seiten und der kleineren Grundfläche des Trapezes entspricht, das den Scherteil (20) des Stanzstempels (18) bildet;
- daß die Schnittflächen der Scherkante (27) zur Innenseite des von ihnen gebildeten Trapezes abgeschrägt sind und daß von den Seiten der Scherkante (27) zwei Flügel (28) abstehen, von denen zugehörige Vertikalteile (29) zur Konstruktionsversteifung rechtwinklig in Richtung des Montageflansches (6) abgehen.

5. Tragbare Werkzeugmaschine nach einem der vorangehenden Ansprüche, dadurch gekennzeichnet, daß die Einrichtung zum Antrieb der Stempelhalteeinrichtung (14) durch einen hydraulischen (7) oder pneumatischen Zylinder oder durch eine geeignete elektromechanische Einrichtung gebildet ist, deren Schubstange (10) mit einem den Stanzstempel (18) haltenden Gleitstück (14) verbunden ist.

6. Tragbare Werkzeugmaschine nach einem der vorangehenden Ansprüche, dadurch gekennzeichnet, daß die Einführeinrichtung zum korrekten Einführen des Blechs (31) zwischen die Matrix (26) und den Stanzstempel (18) durch eine Schrägfläche (37) der oberen Vorderkante der Matrix (26) gebildet ist.

7. Tragbare Werkzeugmaschine nach einem der vorangehenden Ansprüche, dadurch gekennzeichnet, daß die oben genannte Abstands- und Schutzeinrichtung gebildet ist durch prismenförmige Körper (30), deren Grundflächen die Gestalt eines rechtwinkligen Trapezes haben, und durch vordere Abstandshalter (32), die Schnittflächen für eine Schrägseite (38) des abzuscherenden Blechs (31) bilden, wobei Flachplatten (33) lösbar an einer in die Vorderseite der Blöcke (22) dringenden Ausnehmung (24) befestigt sind und Schrägflächen der Scherkante (27) der Matrix (26) entsprechen, so daß alle Zugänge zwischen dem Stanzstempel (18) und der Matrix (26) aus Sicherheitsgründen beseitigt sind.

8. Tragbare Werkzeugmaschine nach einem der vorangehenden Ansprüche, dadurch gekennzeichnet, daß die oben genannte Zentriereinrichtung aus einer Schablone (34) aufgebaut ist, die aus einer Metallplatte besteht, welche an der Rückseite der Führung (11) befestigt ist und rechtwinklig von dieser absteht, wobei die Schablone (34) der Verankerungsseite abgewandt ist, koaxial zur Matrix (26) angeordnet ist und das gleiche Profil wie das Deckblech (36) aufweist.

9. Tragbare Werkzeugmaschine nach einem der vorangehenden Ansprüche, dadurch gekennzeichnet, daß in die zentrale Wandführung (11) und in dem direkt unter der Nut (16) gelegenen Teil des Gleitstücks (14) zum Verankern des Stanzstempels (18) zwei Kreuzöffnungen (13, 17) vorhanden sind, die dazu dienen, das abgeschnittene Stück (39) des Blechs (31) durch Schwerkraft zu entlassen.

10. Tragbare Werkzeugmaschine nach einem der vorangehenden Ansprüche, dadurch gekennzeichnet, daß die Matrix (26) und der Stanzstempel (18) komplementär verschiedene Formen haben und austauschbar sind, um zu verschiedenen Profilen von Deckblechen (36) zu passen.

## Revendications

1. Machine-outil portative pour cisailler des feuilles et des profils de tôle, plus particulièrement une machine (5) pour cisailler un contour profilé sur les arêtes libres d'une feuille de tôle de protection (31) devant être placée verticalement par dessus la nervure raidisseuse d'un toit fabriqué avec des feuilles de tôle de protection (36) de coupe transversale usinée, comprenant :
- des moyens (14) supportant de manière amovible un poinçon de découpage usiné (18) ;
- des moyens de guide (11, 12) à l'intérieur desquels les moyens de poinçon de découpage (14) ci-dessus mentionnés sont entraînés par un coulisseau vers une matrice (26) ouverte et fixée de manière amovible auxdits moyens de guide (11, 12) ;
- des moyens (17) pour le fonctionnement des moyens de poinçon de découpage (14) ci-dessus mentionnés avec un mouvement alterné ;
- des moyens (10) qui transmettent le mouvement depuis les moyens de fonctionnement (7) aux moyens de poinçon de découpage (14) ; caractérisés par le fait qu'ils incluent :
- des moyens d'insertion (37) pour l'introduction correcte du contour de la feuille (31) entre la matrice (26) et le poinçon (18) ;
- des moyens d'écartement et de protection (30) qui déterminent la profondeur d'introduction dans la machine (5) de l'arête de la feuille (31) devant être cisaillée et qui, dans un objectif de sécurité éliminent les orifices latéraux entre la matrice (26) et le poinçon (18) ;
- des moyens de centrage (34) pour la correspondance entre le contour profilé de la feuille de tôle de revêtement (35) et la forme devant être cisaillée dans l'arête libre de la feuille de protection (31) ainsi que des ouvertures transversales (17, 13) respectivement situées dans les moyens de support (14) du poinçon (18) ci-dessus et dans les moyens de guide associés (11, 12) pour le relâchement de la découpe (39) de la feuille de tôle (31).

2. Machine-outil portative selon la revendication 1 destinée à cisailler dans l'arête libre de la feuille de protection (31) de la nervure raidisseuse de toit fabriquée avec des feuilles de revêtement de forme grecque ou des formes de plaque ondulée, des formes trapézoïdales ou correspondant aux diverses formes possibles desdites feuilles de protection (38) ;
caractérisée par le fait que lesdits moyens de support du poinçon sont constitués d'un coulisseau (14) avec des coulisseaux latéraux (15) et un rentrant (16) pour fixer le poinçon (18) ; que ledit poinçon (18) présente une partie parallélépipède (19) pour garantir sa fixation dans le rentrant (16) du coulisseau (14) et une partie de cisaillement (20) ayant la forme d'un prisme trapézoïdal incliné dont la base mineure (21) est déplacée vers la direction de cisaillement.

3. Machine-outil portative selon les revendications précédentes, caractérisée par le fait que lesdits moyens de guide comprennent un guide (11) présentant un corps en forme de prisme et une coupe transversale en forme de "C" et présentant des plaques (12) obtenues sur le côté interne de ses épaulements, deux étançons (22) de forme parallélépipède destinés à limiter, à l'avant du guide (11), les plaques (12) pour le fonctionnement alternatif du coulisseau (14) par rapport à une matrice (26) ouverte et fixée de manière amovible dans un évidement (23) sur le côté avant des étançons (22).

4. Machine-outil portative selon les revendications précédentes, caractérisée par le fait que ladite matrice (26) présente un corps ayant une coupe transversale en forme de "V" et une coupe longitudinale en forme de "L" ; que l'arête de cisaillement (27) de la matrice (26) correspond presque aux deux côtés inclinés et à la base mineure du trapèze qui constitue la partie de cisaillement (20) du poinçon à découper (18) ; que les surfaces de martelage de l'arête de cisaillement (27) sont inclinées vers l'intérieur du trapèze formé par celles-ci et que, depuis les côtés de l'arête de cisaillement (27), deux ailes (28) font saillie desquelles des portions verticales respectives (29) partent à angle droit dans la direction de la bride de fixation (6) destinée à renforcer la structure.

5. Machine-outil portative selon les revendications précédentes, caractérisée par le fait que les moyens de fonctionnement du support (14) de poinçon sont constitués par un vérin hydraulique (7) ou par un vérin pneumatique ou par un dispositif électromécanique approprié dont la tige (10) est connectée au poinçon de support (18) du coulisseau (14).

6. Machine-outil portative selon les revendications précédentes, caractérisée par le fait que les moyens d'insertion pour l'introduction correcte de la feuille de tôle (31) entre la matrice (26) et le poinçon (18) sont constitués par un chanfrein (37) de l'arête avant supérieure de la matrice (26).

7. Machine-outil portative selon les revendications précédentes, caractérisée par le fait que les dispositifs d'écartement et les moyens de protection ci-dessus mentionnés sont constitués par des corps en forme de prisme (30) présentant des bases ayant la forme d'un trapèze à angle droit et des dispositifs d'écartement avant (32) qui constituent les surfaces de martelage pour le côté incliné (38) de la feuille (31) devant être cisaillée, les surfaces (33) fixées de manière amovible à un évidement (24) dans le côté avant des étançons (22) et les surfaces d'inclinaison correspondant à l'arête de cisaillement (27) de la matrice (26), de sorte que tous les orifices sont éliminés entre le poinçon (18) et la matrice (26) pour des besoins de sécurité.

8. Machine-outil portative selon les revendications précédentes, caractérisée par le fait que les moyens de centrage ci-dessus mentionnés sont composés d'un gabarit (34) fabriqué à partir d'une plaque métallique fixée à l'arrière du guide (11) et faisant saillie à angle droit depuis celui-ci, le côté opposé à la fixation dudit gabarit (34), coaxial par rapport à la matrice (26), étant égal au profil de la feuille de tôle (36) de revêtement usinée.

9. Machine-outil portative selon les revendications précédentes, caractérisée par le fait que, à l'intérieur de la paroi de guidage centrale (11) et dans la partie du coulisseau (14) directement sous le rentrant (16) destinée à fixer le poinçon (18), se trouvent deux ouvertures transversales (13, 17) destinées à relâcher la découpe (39) de la plaque (31) par gravité.

10. Machine-outil portative selon les revendications précédentes, caractérisée par le fait que le groupe de matrice (26) et de poinçon (18) peut avoir des formes réciproquement différentes et peut être modifié pour s'adapter à plusieurs profils de feuilles de revêtement (36).
